# FASCICULE DE BREVET EUROPEEN

(11) **EP 2 736 843 B1**
(45) Date de publication et mention de la délivrance du brevet: **26.10.2016**
(21) Numéro de dépôt: 12744115.2
(22) Date de dépôt: 26.07.2012
(51) Int. Cl.: C01B 31/02, B01J 20/20, B01J 20/28, B01J 20/30, H01M 4/96

(54) **PROCÉDÉ DE PRÉPARATION D'UNE MOUSSE DE CARBONE ET UTILISATION DU MATÉRIAU OBTENU**
VERFAHREN ZUR HERSTELLUNG EINES KOHLESCHAUMS UND VERWENDUNG DES GEWONNENEN STOFFES
PROCESS FOR PREPARING A CARBON FOAM AND USE OF THE MATERIAL OBTAINED

(30) Priorité: 27.07.2011 FR 1156870
(43) Date de publication de la demande: 04.06.2014
(73) Titulaire: Centre National de la Recherche Scientifique, 75016 Paris (FR); Université de Picardie Jules Verne, 80039 Amiens (FR)
(72) Inventeur: POIZOT, Philippe, 80000 Amiens (FR); DOLHEM, Franck, 80080 Amiens (FR); CHOTARD, Jean-Noël, 80000 Amiens (FR)
(74) Mandataire: Goulard, Sophie
(86) Numéro de dépôt international: PCT/FR2012/051776
(87) Numéro de publication internationale: WO 2013/014395

(56) Documents cités:
- US-A- 4 873 218
- US-A1- 2005 207 962
- US-A1- 2011 140 051
- DATABASE WPI Week 200818 Thomson Scientific, London, GB; AN 2008-C41437 XP002671952, & JP 2007 295540 A (NGK SPARK PLUG CO LTD) 8 novembre 2007 (2007-11-08)
- MORENO-CASTILLA C ET AL: "Carbon aerogels for catalysis applications: An overview", CARBON, ELSEVIER, OXFORD, GB, vol. 43, no. 3, 1 janvier 2005 (2005-01-01), pages 455-465, XP004694125, ISSN: 0008-6223, DOI: 10.1016/J.CARBON.2004.10.022 cité dans la demande
- GUNTHER SEITZ ET AL: "Oxocarbons and pseudooxocarbons", CHEMICAL REVIEWS, vol. 92, no. 6, 1 septembre 1992 (1992-09-01), pages 1227-1260, XP055022192, ISSN: 0009-2665, DOI: 10.1021/cr00014a004 cité dans la demande

## Description

La présente invention est relative à un procédé de préparation d'une mousse de carbone, à partir d'oxocarbones ou pseudo-oxocarbones sélectionnés, à basse température et à l'utilisation du matériau obtenu par la mise en oeuvre de ce procédé pour la fabrication d'un système pour la détection d'ondes lumineuses.

Le carbone pur existe sous deux formes cristallines allotropiques : le diamant et le graphite. Dans la nature, une troisième source de carbone pur est le carbone amorphe (suies), état désordonné de la matière. A la fin des années 80, de nouveaux types de carbone (artificiels) ont été identifiés tels que les fullerènes et les nanotubes (simple ou multi-parois). Plus récemment, il a été montré que l'on pouvait même préparer des feuilles individuelles de carbone de l'épaisseur d'un atome de C (le graphène) qui est un cristal de carbone bidimensionnel formé de cellules hexagonales. La richesse de la chimie du carbone vient des différentes configurations électroniques qu'il peut prendre ce qui conduit à l'obtention de propriétés remarquables.

Hormis l'allotrope diamant qui exige des conditions de synthèse dures (forte pression : 70000 atm, haute température : 1500 à 3000°C), on peut citer deux voies classiques qui permettent de fabriquer du carbone à relativement basse température.

La première voie est la pyrolyse (ou carbonisation). Cette méthode consiste en la décomposition d'un composé organique par la chaleur (sans flamme, pour éviter l'oxydation). Par exemple, les matières organiques telles que la houille, l'anthracite, les cokes de pétrole et les brais (obtenus par distillation des goudrons), les polymères, les hydrocarbures sont les précurseurs qui permettent d'obtenir du graphite artificiel. En présence d'un catalyseur métallique, la pyrolyse d'hydrocarbures permet également de former des nanotubes de carbone (M. Terrones, Annu. Rev. Mater. Res., 2003, 33, 419). Lors de la pyrolyse, plusieurs étapes ont lieu : l'élimination des matières volatiles contenues dans les matières premières, la rupture des liaisons des précurseurs, l'élimination de l'hydrogène, polymérisations multiples... La température finale de pyrolyse régit le degré de carbonisation et le contenu résiduel en éléments autres que le carbone. Généralement, la pyrolyse est réalisée en chauffant progressivement les matières premières jusqu'à environ 1000°C. Cette technique nécessite cependant plusieurs étapes, la manipulation d'hydrocarbures, notamment sous forme gazeuse, l'utilisation de températures élevées, typiquement supérieures à 600°C.

La deuxième voie met à profit l'équilibre de Boudouard qui n'est autre que l'équilibre solide-gaz de dismutation du monoxyde de carbone que l'on peut écrire comme suit (équation 1) :

2 CO_{(g)} ⇆ CO_{2(g)} + C₍ₛ₎ (1)

Comme tout équilibre, son déplacement est lié aux conditions de température. Ainsi, si CO est stable au-dessus de 950°C à pression atmosphérique, il se décompose aux plus basses températures pour donner du carbone et du CO₂ gazeux. Thermodynamiquement, à des températures inférieures à 400°C, le CO est totalement dissocié (D. G. Walker, L. Hadley-Coates, Int. J. Energ. Res., 1988, 12, 243). Une des applications de l'équilibre (1) est la formation de carbone sous forme de nanotubes ou de fibres dans des conditions catalytiques (utilisation de Mo ou Fe, par exemple (M. Terrones, ibid). Ce procédé conduit à des carbone de types particuliers (nanotubes ou fibres), et il impose la manipulation de gaz CO ou de complexes métalliques à base de CO qui présentent une forte toxicité (typiquement Fe(CO)₅).

Ainsi, de multiples méthodes de synthèse ont été développées et l'on dispose aussi aujourd'hui d'un large panel de types de carbone caractérisés par différentes structures, morphologies et textures et notamment des matériaux carbonés à grande porosité. Les matériaux carbonés poreux constituent des matériaux de choix pour de nombreuses applications telles que la purification de l'eau et de l'air, l'adsorption, la catalyse en phase hétérogène, la fabrication d'électrodes et le stockage de l'énergie en raison de leur grande surface spécifique, de leur grand volume de pores, de leur insensibilité aux réactions chimiques environnantes et de leurs bonnes propriétés mécaniques. Parmi les matériaux carbonés présentant une porosité élevée, on peut en particulier citer les « gels de carbone » qui sont obtenus par pyrolyse de gels organiques poreux (préparés en amont) à des températures comprises entre 500 et 2500°C (voir par exemple US 4,873218 et WO2009/125094), ces derniers étant classiquement obtenus à partir de la condensation sol-gel de certains monomères organiques comme les mélanges résorcinol (R)/formaldéhyde (F) (méthode de Pekala), le choix de la méthode de séchage permettant d'accéder soit à des aérogels soit à des xérogels, (voir notamment C. Moreno-Castilla, F. J. Maldonado-Hódar, Carbon, 2005, 43, 455). Ces « gels » de carbone sont caractérisés par un réseau interconnecté de nanoparticules de carbone laissant place à une grande porosité induisant une faible densité. Ces procédés présentent néanmoins un certain nombre d'inconvénients dans la mesure où ils nécessitent plusieurs étapes impliquant une synthèse sol-gel, des conditions de séchage spécifiques et une pyrolyse très contrôlée (températures supérieures à 600°C), ainsi que l'utilisation de multiples réactifs.

Le but de la présente invention est de proposer un procédé de préparation d'un matériau carboné à haute porosité permettant de remédier aux inconvénients des procédés utilisés dans l'art antérieur. En particulier, les inventeurs se sont fixés pour but de mettre au point un procédé de préparation de matériaux carbonés hautement poreux qui soit simple à mettre en oeuvre, rapide (idéalement en une seule étape), peu couteux et non toxique.

Ce but est atteint par le procédé qui fait l'objet de la présente invention et qui va être décrit ci-après.

La présente invention a donc pour objet un procédé de préparation d'un matériau carboné poreux, caractérisé en ce qu'il comprend au moins une étape de traitement thermique à une température d'au moins 300°C, sous atmosphère non oxydante, d'une molécule organique choisie parmi les oxocarbones et les pseudo-oxocarbones de formules (I-1) à (I-7) suivantes : 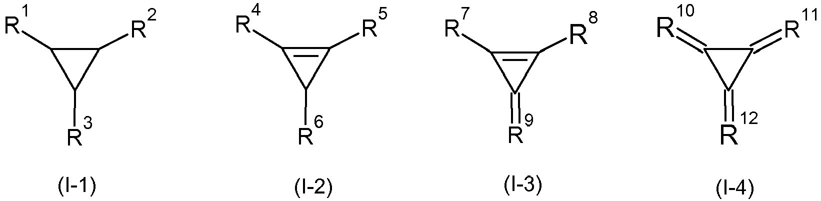 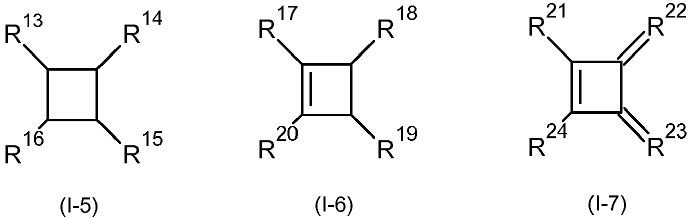 dans lesquelles :
- R¹ à R⁸, R¹³ à R²¹ et R²⁴, indépendamment les uns des autres, représentent OH ; SH ; un groupement O-alkyle ou S-alkyle dans lesquels le radical alkyle est linéaire et comporte de 1 à 4 atomes de carbone ; un groupement O-aryle ou S-aryle dans lequel le cycle aryle est un cycle phényle ou un cycle phényle substitué en position para par un groupe O-méthyle ou S-méthyle ; ou un groupement NR²⁵R²⁶ dans lequel les radicaux R²⁵ et R²⁶, identiques ou différents, représentent un radical alkyle en C₁-C₄ ;
- R⁹ à R¹², R²² et R¹³, indépendamment les uns des autres, représentent un atome d'oxygène ou de soufre ; un groupement N-CN (isocyano) ou un groupement C(CN)₂ (malononitrile).

La mise en oeuvre d'un tel procédé provoque la décomposition brutale et totale des composés de formules (I-1) à (I-7) (suivant une réaction exothermique unique) et conduit de manière concomitante à la formation de carbone et de gaz (H₂O, CO₂, CO dans le cas où l'hétéroatome est l'oxygène). Le mécanisme de formation de ce carbone est celui d'une pyrolyse couplé en partie à la formation de carbone Boudouard de part le dégagement de CO généré au cours de la décomposition. Au-delà du fait que la température d'obtention de carbone pur est relativement basse (pour une pyrolyse) et que le procédé en lui-même est extrêmement simple et peu coûteux, une autre propriété surprenante vient du fait que le carbone obtenu se présente sous la forme d'une mousse expansée, peu dense, présentant des propriétés photo-acoustiques.

Les composés de formule (I-1) à (I-7) sont des composés connus qui peuvent soit être obtenus dans le commerce soit par synthèse, par exemple selon les procédés décrits par Gunther Seitz and Peter Imming (Chem. Rev., 1992, 1227-1260).

Dans les composés de formule (I-1) à (I-7) ci-dessus :
- le radical alkyle mentionné pour R¹ à R⁸, R¹³ à R²¹ et R²⁴ est de préférence un radical méthyle ;
- R²⁵ et R²⁶ sont de préférence identiques et représentent un méthyle.

Selon une forme de réalisation préférée de l'invention, le procédé met en oeuvre une molécule organique choisie parmi les composés de formule (I-1) à (I-7) dans lesquels les substituants R sont choisis parmi OH et O.

Selon une forme de réalisation tout particulièrement préférée de l'invention, le procédé met en oeuvre un composé de formule (I-3) dans laquelle R⁷ = R⁸ = OH et R⁹ = O ou un composé de formule (I-7) dans laquelle R²² = R²³ = O et R²¹ = R²⁴ = OH. Ces composés correspondent respectivement à l'acide deltique et à l'acide squarique, ce dernier étant tout particulièrement préféré selon l'invention. Selon la nomenclature IUPAC, l'acide deltique correspond à la 2,3-dihydroxycycloprop-2-èn-1-one (CAS n° 54826-91-4) et l'acide squarique à la 3,4-dihydroxycyclobut-3-èn-1,2-dione (CAS n° 2892-51-5).

Selon une forme de réalisation préférée, la température de traitement thermique est de l'ordre de 400°C.

L'atmosphère non oxydante est de préférence apportée par un flux de diazote, d'argon, d'hélium, d'hydrogène, lesdits flux étant utilisés seuls ou en mélange.

Selon une forme de réalisation particulièrement préférée de l'invention, le traitement thermique est réalisé à pression atmosphérique et sans catalyseur métallique.

Selon le procédé conforme à l'invention, la molécule organique de départ est utilisée sous forme de poudre.

Le traitement thermique peut par exemple être réalisé dans un four tubulaire horizontal.

La durée du traitement thermique varie de préférence de 2 à 4 heures.

Le traitement thermique est de préférence réalisé avec une montée en température variant de 1 à 10°C/minute, de la température ambiante jusqu'à la température désirée (d'au moins 300°C). Un palier de température peut ensuite être imposé, un traitement ou une activation à plus haute température peut aussi être envisagé.

Le matériau carboné obtenu par la mise en oeuvre du procédé décrit précédemment est constitué d'une matrice poreuse composée essentiellement de carbone en configuration sp², dont les pores sont interconnectés et présentent une dimension moyenne d'environ 40 Å.

Ce matériau présente une surface spécifique (BET) de l'ordre de 750 m²/g avec une contribution de surface des pores d'environ 300 m²/g.

Généralement, il se présente sous la forme d'une mousse expansée (monolithique), qui peut, le cas échéant, être réduite en poudre suivant les applications souhaitées.

Il est clairement établi que la morphologie particulière du carbone ainsi obtenu (mousse très aérée) est due à une décomposition brutale du réactif s'expliquant par la structure particulièrement tendue de ce dernier (cycle en C3 ou C4) et s'accompagnant de dégagement de bulles de gaz autour desquelles vient se former le carbone. Compte tenu de cette morphologie particulière, le matériau carboné poreux issu de la mise en oeuvre du procédé conforme à l'invention présente une réponse photoacoustique effective.

Ainsi, l'invention a également pour objet l'utilisation d'un matériau carboné poreux obtenu par la mise en oeuvre du procédé conforme à l'invention pour la fabrication d'un système pour la détection d'ondes lumineuses. Ce matériau tel que défini ci-dessus est en effet capable de convertir, par transduction, un signal optique en onde acoustique (excitation à une longueur d'onde comprise dans la gamme spectrale de l'UV visible).

La présente invention est illustrée par les exemples de réalisation suivants, auxquels elle n'est cependant pas limitée.

### EXEMPLES

Les matériaux carbonés synthétisés ont été caractérisés de la façon suivante :
Des analyses thermogravimétriques couplées à la spectrométrie de masse ont été effectuées à l'aide d'un appareil vendu sous la dénomination commerciale STA 449C Jupiter (Netzsch) en utilisant une nacelle d'alumine et une vitesse de chauffe de 1°C/min (débit d'argon : 50 mL/min).
Des analyses thermiques différentielle (DSC de l'expression anglaise *« Differential Scanning Calorimetry* ») ont été réalisées au moyen d'un appareil vendu sous la référence 204F1 (Netzsch) en utilisant une nacelle d'aluminium et une vitesse de chauffe de 1°C/min (débit d'argon : 200 mL/min).

Des mesures de diffraction par rayons X en température ont été conduites grâce à un diffractomètre D8 Advance (Bruker) équipé d'une anticathode de cobalt (λ_{Kα1}=1,788970 Å, λ_{Kα2}=1/792850 Å) ainsi que d'une chambre chauffante Anton Parr HTK1200. Durant toute la durée de l'expérience, l'échantillon a été maintenu sous un flux constant d'argon. Un total de 21 diffractogrammes a été enregistré. Le premier à température ambiante, les 19 suivants tous les 20°C entre 40 et 400°C avec une vitesse de chauffe de 3°C/min et un dernier de nouveau à température ambiante après refroidissement. Chaque diffractogramme a été enregistré entre 10 et 70° (2θ) avec un pas de 0,03° et une vitesse de scan de 1,5 s/pas ce qui correspond à des temps d'acquisition d'environ 53 minutes.

La morphologie du carbone obtenu a été caractérisée par microscopie électronique en transmission (MET) à l'aide d'un microscope de type Tecnai F20 S-TWIN ® de chez FEI.

Le carbone a aussi été caractérisé par spectroscopie Raman et Infrarouge (FTIR). Les mesures Raman ont été effectuées sur un spectromètre Jobin-Yvon T6400 équipé d'un triple mono-chromateur et d'un détecteur CCD refroidi par azote liquide. Les échantillons analysés ont été illuminés par un faisceau laser de longueur d'onde 514 nm d'une puissance en sortie de laser de 20mW. Les mesures ont été faites en mode confocal dans la gamme 500-2200 cm⁻¹ avec une résolution de 1 cm⁻¹. Les spectres ont été obtenus après l'acquisition de 10 mesures de 5 secondes. Les mesures FTIR ont été réalisées sur un spectromètre infrarouge à transformée de Fourier Bruker Vector 22 ® en mode transmission. Ce spectromètre était équipé d'un détecteur DTGS d'une résolution de 1 cm⁻¹ et d'un filtre séparateur en KBr. Ces mesures ont été réalisées par l'accumulation de 30 mesures. Les mesures d'émission acoustique ont été réalisées grâce à un capteur piézo-électrique. Le signal détecteur a ensuite été amplifié par un amplificateur +40 dB dans le domaine de fréquence 20-1200 kHz.

Les mesures photoacoustiques ont été réalisées par couplage d'un flash photographique et d'un système de détection acoustique. La détection et la conversion du signal acoustique ont été assurées par un capteur piézo-électrique large bande. Le signal a été pré-amplifié avec un gain de 40 dB dans le domaine de fréquence 20-1200 kHz. Une carte d'acquisition permet la conversion des signaux électriques en signaux numériques après filtrage et amplification.

Les mesures de surface spécifique ont été faites à 77,4 K par des techniques d'adsorption-désorption du diazote à l'aide d'un appareil commercialisé sous la dénomination Micromeritics ASAP 2010 ; le dépouillement étant fait par les méthodes de calcul B.E.T ou B.J.H. Avant analyse, les échantillons ont été traités à 300°C pendant 4 heures sous vide (15 µm de Hg) de façon à éliminer un maximum d'espèces adsorbées.

### Exemple 1

### Préparation et caractérisation d'un matériau carboné poreux selon le procédé conforme à l'invention à partir d'acide squarique

### 1) : Matériel et Méthode

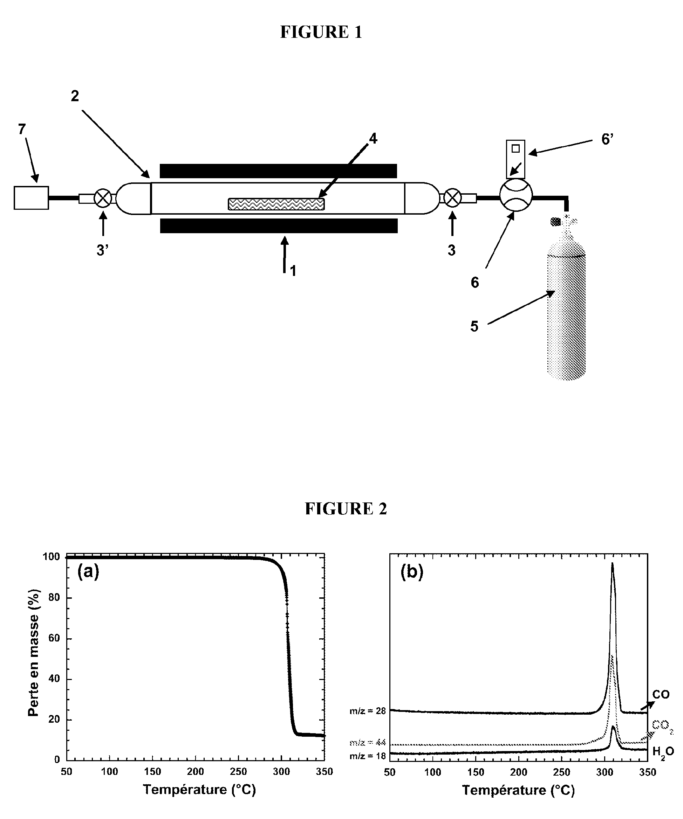

Sur le plan expérimental, la synthèse du matériau carboné a été réalisée dans un four tubulaire horizontal (1) programmable en température tel que représenté sur la figure 1 annexée, de type 55035 (société Lindberg) muni d'un tube en pyrex (2) d'une longueur de 45 cm (diamètre 29/32) équipé de deux vannes d'isolement (3, 3'), le tube en pyrex étant destiné à recevoir une nacelle de combustion (4) en alumine (High-alumina combustion boat, CoorsTek, Inc., Item No : 65564), renfermant la poudre de la molécule organique à traiter, ledit tube étant relié à un circuit de gaz non réactif alimenté au moyen d'une bombonne (5) sous pression (P = 1,1 bar, flux = 2-5 SCCM (Standard Centimètre Cube par Minute)), ledit circuit de gaz étant ouvert avec contrôle en entrée au moyen d'un débitmètre volumique (6) à affichage numérique (6') et terminé par un bulleur (7) rempli d'huile de silicone de manière à éviter toute entrée d'air dans le montage.

350 mg d'acide squarique (Alfa Aesar) ont été préalablement déposés dans la nacelle de combustion (5) puis celle-ci a été enfournée dans le tube (2). Une fois la nacelle (5) placée dans le tube en pyrex (2) et l'ensemble du montage placé sous atmosphère de diazote, on a procédé à une montée en température à une vitesse de 1°C/min jusqu'à 400°C suivi d'un palier de 2 heures.

On a obtenu une mousse de carbone qui a ensuite été caractérisée.

L'analyse thermique de l'acide squarique de départ a également été effectuée.

### 2) Résultats et caractérisations

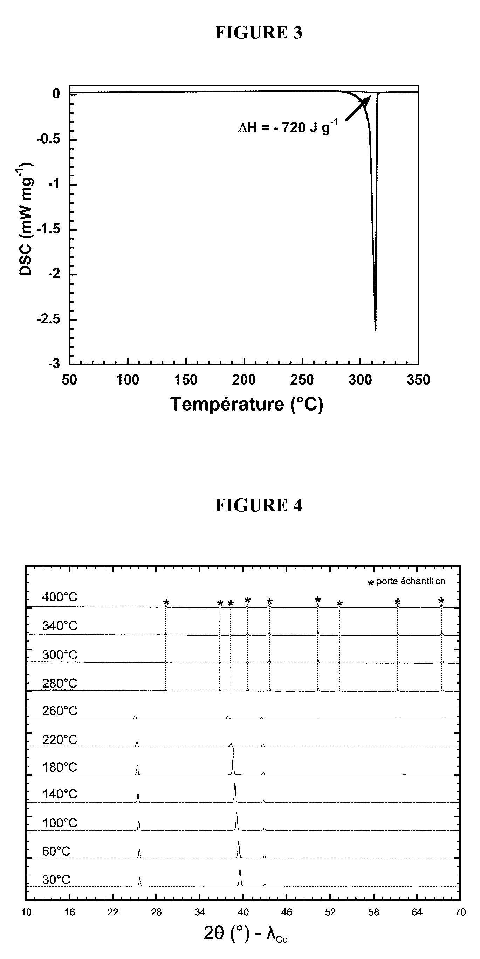

Les figures 2 et 3 annexées représentent l'analyse thermique de l'acide squarique. Sur la figure 2a, la perte de masse (en %) est exprimée en fonction de la température, la figure 2b représentant les données de spectrométrie de masse associées (les valeurs de m/z = 18, 28 et 44 correspondent respectivement aux dégagements de H₂O, de CO et de CO₂). La figure 3 est une mesure par calorimétrie différentielle à balayage (thermogramme exprimé en mW.mg⁻¹ en fonction de la montée en température en °C) qui permet d'atteindre la valeur d'enthalpie de la réaction de pyrolyse par intégration du pic exothermique.

Ces résultats couplés au suivi par diffraction des rayons X en chambre chauffante (figure 4 annexée) montrent que l'acide squarique est stable jusqu'à environ 280°C. Au-delà, ce composé organique se décompose rapidement au cours d'un processus fortement exothermique (Δ*H* = -720 J g⁻¹ soit -82080 J mol⁻¹) resserré aux voisinages de 300°C. L'acide squarique est alors décomposé (pyrolysé) en carbone pur avec dégagement de H₂O, CO et CO₂.

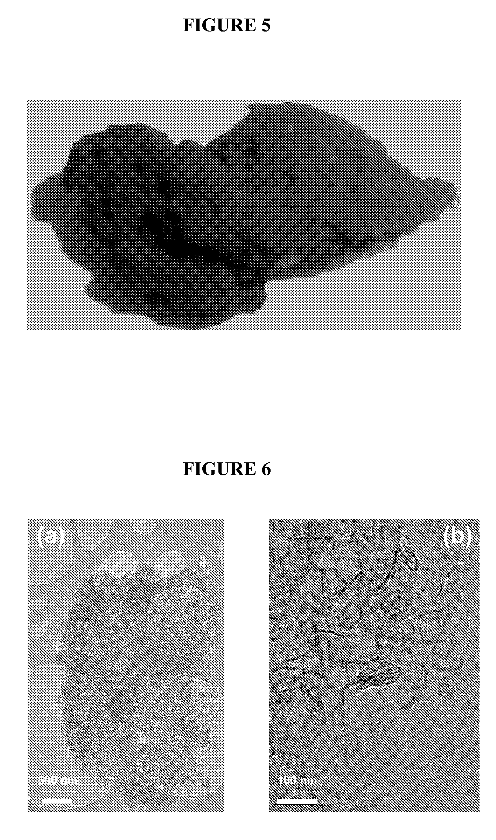

La Figure 5 est un cliché de la « mousse » expansée de carbone ainsi obtenue pour T = 400°C. Cette mousse reste fragile mécaniquement compte tenu de sa grande porosité mais montre malgré tout une certaine souplesse. Cette mousse peut ensuite être réduite en poudre par broyage manuel au mortier si on le souhaite.

La morphologie du carbone ainsi produit a été caractérisée par microscopie électronique en transmission. Les images sont rapportées sur la figure 6 annexée (à deux grossissements : a) : x 5000 et b) x 38000 et montrent une structuration très poreuse à la manière d'un aérogel/xérogel ce qui permet de distinguer par transparence la membrane de carbone du porte-objet de microscopie située en dessous de l'agglomérat de particules de carbone.

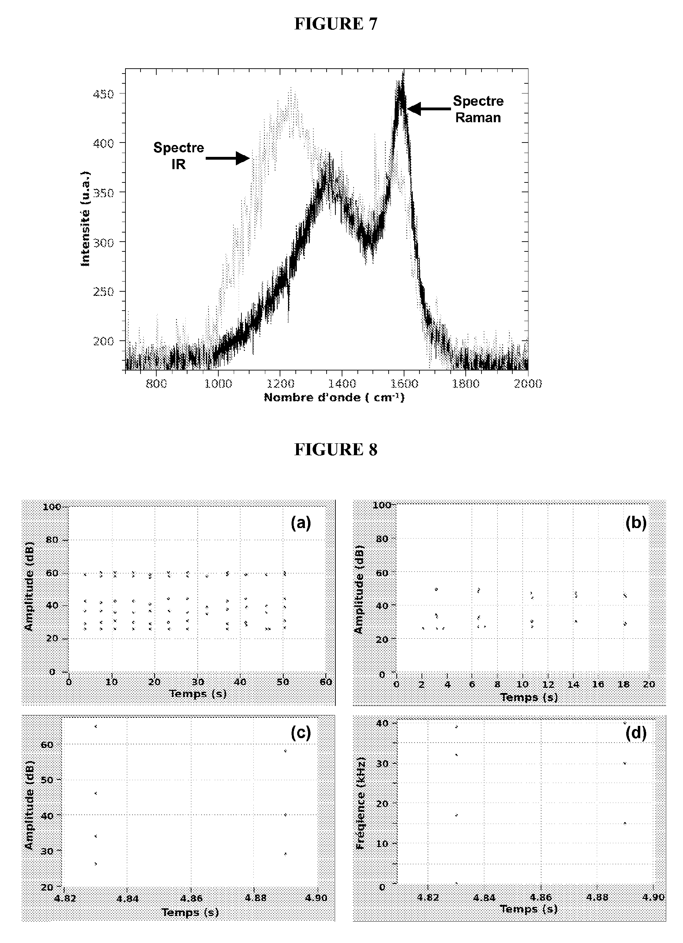

L'analyse par spectroscopie Raman et FTIR est rapportée sur la figure 7 annexée sur laquelle l'intensité (en unités arbitraires) est fonction de la longueur d'onde (en cm⁻¹). Le tracé noir est le spectre Raman alors que le spectre FTIR est le tracé gris. Le spectre Raman montre deux pics centrés autour des positions 1350 cm⁻¹ (pic D) et 1590 cm⁻¹ (pic G). Ces deux bandes caractéristiques du carbone correspondent aux vibrations des liaisons C=C. La faible largeur à mi-hauteur des deux pics suggère également une bonne cristallinité de ces mousses. Le spectre FTIR (tracé gris) confirme également cette structure et est superposable au spectre Raman. Ce comportement confirme que les mousses de carbone obtenues selon le procédé conforme à la présente invention sont essentiellement composées de carbone en configuration sp² (carbone pur). Il convient également de noter que les spectres de FTIR ne présentent aucun pic pouvant correspondre à des liaisons terminales de type CHₓ, CO ou CN.

Compte tenu de la nature extrêmement poreuse du carbone obtenu, une mesure de surface spécifique BET et de distribution poreuse BJH a été réalisée à partir de la physisorption du diazote à 77,4 K. La mesure de la surface spécifique BET est de l'ordre de 750 m²/g avec une contribution de la surface des micropores d'environ 300 m²/g. La distribution poreuse est principalement centrée sur 40 Å.

Les mesures photoacoustiques sont rapportées sur la figure 8 annexée. Sur les figures 8a, 8b et 8c l'amplitude de la réponse acoustique (en dB) est fonction du temps (en s.) et sur la figure 8d, la fréquence (en kHz) est fonction du temps (en s.). Ces mesures photoacoustiques montrent que le phénomène de photo-émission, (figure 8a), est reproductible et ne génère pas de dégradation ou de modifications irréversibles du matériau. Une mesure plus précise montre clairement (figure 8b et 8c) que la réponse acoustique à l'éclairage génère deux signaux espacés de 0,6 s. Les deux craquements sont composés de plusieurs émissions distinctes de fréquences: 16 kHz, 32 kHz et 40 kHz (figure 8c).

## Revendications

1. Procédé de préparation d'un matériau carboné poreux, **caractérisé en ce qu'**il comprend au moins une étape de traitement thermique à une température d'au moins 300°C, sous atmosphère non oxydante, d'une molécule organique choisie parmi les oxocarbones et pseudo-oxocarbones de formules (I-1) à (I-7) suivantes : 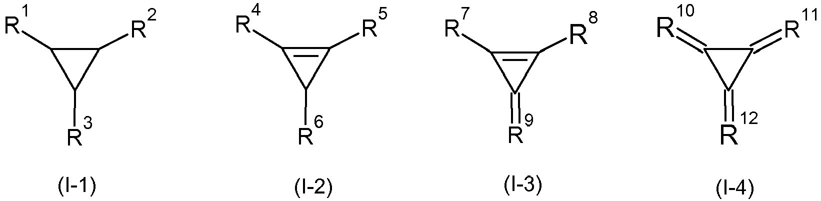 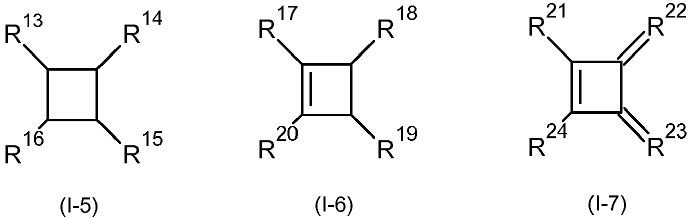 dans lesquelles :
- R¹ à R⁸, R¹³ à R²¹ et R²⁴, indépendamment les uns des autres, représentent OH ; SH ; un groupement O-alkyle ou S-alkyle dans lesquels le radical alkyle est linéaire et comporte de 1 à 4 atomes de carbone ; un groupement O-aryle ou S-aryle dans lequel le cycle aryle est un cycle phényle ou un cycle phényle substitué en position para par un groupe O-méthyle ou S-méthyle ; ou un groupement NR²⁵R²⁶ dans lequel les radicaux R²⁵ et R²⁶, identiques ou différents, représentent un radical alkyle en C₁-C₄ ;
- R⁹ à R¹², R²² et R²³, indépendamment les uns des autres, représentent un atome d'oxygène ou de soufre ; un groupement N-CN (isocyano) ou un groupement C(CN)₂ (malononitrile).

2. Procédé selon la revendication 1, **caractérisé en ce que** dans les composés de formule (I-1) à (I-7) :
- le radical alkyle mentionné pour R¹ à R⁸, R¹³ à R²¹ et R²⁴ est un radical méthyle ;
- R²⁵ et R²⁶ sont identiques et représentent un méthyle.

3. Procédé selon la revendication 1, **caractérisé en ce que** le procédé met en oeuvre une molécule organique choisie parmi les composés de formule (I-1) à (I-7) dans lesquels les substituants R sont choisis parmi OH et O.

4. Procédé selon la revendication 1, **caractérisé en ce que** la molécule organique est un composé de formule (I-3) dans laquelle R⁷ = R⁸ = OH et R⁹ = O ou un composé de formule (I-7) dans laquelle R²² = R²³ = O et R²¹ = R²⁴ = OH.

5. Procédé selon l'une quelconque des revendications précédentes, **caractérisé en ce que** la température de traitement thermique est de 400°C.

6. Procédé selon l'une quelconque des revendications précédentes, **caractérisé en ce que** l'atmosphère non oxydante est apportée par un flux de diazote, d'argon, d'hélium, d'hydrogène, lesdits flux étant utilisés seuls ou en mélange.

7. Procédé selon l'une quelconque des revendications précédentes, **caractérisé en ce que** le traitement thermique est réalisé à pression atmosphérique et sans catalyseur métallique.

8. Procédé selon l'une quelconque des revendications précédentes, **caractérisé en ce que** la molécule organique de départ est utilisée sous forme de poudre.

9. Procédé selon l'une quelconque des revendications précédentes, **caractérisé en ce que** la durée du traitement thermique varie de 2 à 4 heures.

10. Procédé selon l'une quelconque des revendications précédentes, **caractérisé en ce que** le traitement thermique est réalisé avec une montée en température variant de 1 à 10°C/minute, de la température ambiante jusqu'à la température désirée.

11. Utilisation d'un matériau obtenu selon le procédé défini à l'une quelconque des revendications 1 à 10, ledit matériau étant constitué d'une matrice poreuse composée essentiellement de carbone en configuration sp² et dont les pores sont interconnectés et présentent une dimension moyenne de 40 Å, pour la fabrication d'un système pour la détection d'ondes lumineuses.

## Patentansprüche

1. Verfahren zur Herstellung eines porösen Kohlematerials, **dadurch gekennzeichnet, dass** es mindestens einen Schritt der thermischen Verarbeitung bei einer Temperatur von mindestens 300 °C unter nicht oxidierender Atmosphäre eines organischen Moleküls umfasst, das aus den Oxocarbonen und Pseudo-Oxocarbonen der folgenden Formeln (I-1) bis (I-7) ausgewählt ist: 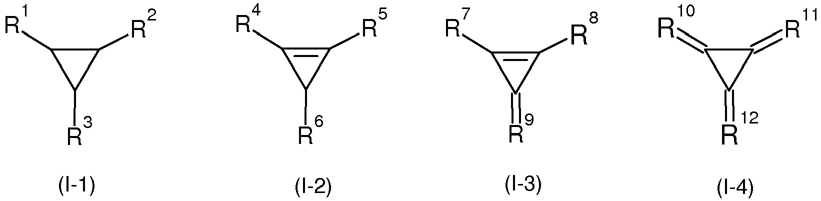 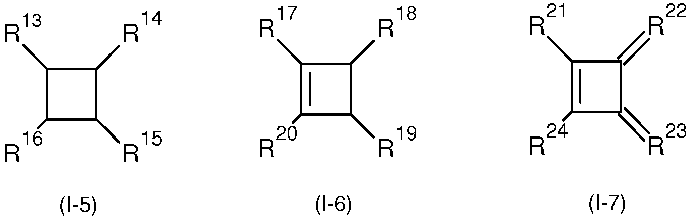 wobei :
- R¹ bis R⁸, R¹³ bis R²¹ und R²⁴ unabhängig voneinander darstellen OH; SH; eine O-Alkyl- oder S-Alkyl-Gruppen, in denen das Alkylradial linear ist und 1 bis 4 Kohlenstoffatome aufweist; eine O-Aryl- oder S-Aryl-Gruppe, in denen der Arylzyklus ein Phenylzyklus oder ein Phenylzyklus, substituiert an para-Position durch eine O-Methyl- oder S-Methyl-Gruppe; oder eine NR²⁵R²⁶-Gruppe, in der die identischen oder unterschiedlichen Radikale R²⁵ und R²⁶ ein C₁-C₄-Alkylradikal darstellen;
- R⁹ bis R¹², R²² und R²³ unabhängig voneinander darstellen ein Sauerstoff- oder ein Schwefelatom; eine N-CN (Isocyano)- oder eine C(CN)₂ (Malononitril-) Gruppe.

2. Verfahren nach Anspruch 1, **dadurch gekennzeichnet, dass** in den Verbindungen der Formel (I-1) bis (I-7):
- das für R¹ bis R⁸, R¹³ bis R²¹ und R²⁴ erwähnte Alkylradikal ein Methylradikal ist,
- R²⁵ und R²⁶ identisch sind und ein Methyl darstellen.

3. Verfahren nach Anspruch 1, **dadurch gekennzeichnet, dass** das Verfahren ein organisches Molekül umsetzt, das aus den Verbindungen der Formel (I-1) bis (I-7) ausgewählt ist, in denen die Substituenten R aus OH und O ausgewählt sind.

4. Verfahren nach Anspruch 1, **dadurch gekennzeichnet, dass** das organische Molekül eine Verbindung der Formel (I-3) ist, in welcher R⁷ = R⁸ = OH und R⁹ = O ist oder eine Verbindung der Formel (I-7), in welcher R²² = R²³ = O und R²¹ = R²⁴ = OH ist.

5. Verfahren nach einem der vorangehenden Ansprüche, **dadurch gekennzeichnet, dass** die Temperatur der thermischen Verarbeitung 400 °C beträgt.

6. Verfahren nach einem der vorangehenden Ansprüche, **dadurch gekennzeichnet, dass** die nicht oxidierende Atmosphäre mittels eines Diazot-, Argon-, Helium-, Wasserstoffstroms herangeführt wird, wobei die Ströme allein oder gemischt verwendet werden.

7. Verfahren nach einem der vorangehenden Ansprüche, **dadurch gekennzeichnet, dass** die thermische Verarbeitung bei atmosphärischem Druck und ohne Metallkatalysator durchgeführt wird.

8. Verfahren nach einem der vorangehenden Ansprüche, **dadurch gekennzeichnet, dass** das organische Ausgangsmolekül in Form von Pulver verwendet wird.

9. Verfahren nach einem der vorangehenden Ansprüche, **dadurch gekennzeichnet, dass** die Dauer der thermischen Verarbeitung von 2 bis 4 Stunden schwankt.

10. Verfahren nach einem der vorangehenden Ansprüche, **dadurch gekennzeichnet, dass** die thermische Verarbeitung mit einem Temperaturanstieg durchgeführt wird, der von 1 bis 10 °C/Minute schwankt, von der Umgebungstemperatur bis auf die gewünschte Temperatur.

11. Verwendung eines Materials, das gemäß dem Verfahren nach einem der Ansprüche 1 bis 10 gewonnen wird, wobei das Material aus einer porösen Matrix besteht, die im Wesentlichen aus Carbon in Konfiguration sp² besteht und dessen Poren untereinander verbunden sind und eine mittlere Größe von Å aufweisen, für die Herstellung eines Systems zur Detektion von Lichtwellen.

## Claims

1. A method for preparing a porous carbonaceous material, **characterized in that** it comprises at least one heat treatment step at a temperature of at least 300°C, under a non-oxidizing atmosphere, of an organic molecule selected from among oxocarbons and pseudo-oxocarbons of the following formulae (I-1) to (I-7): 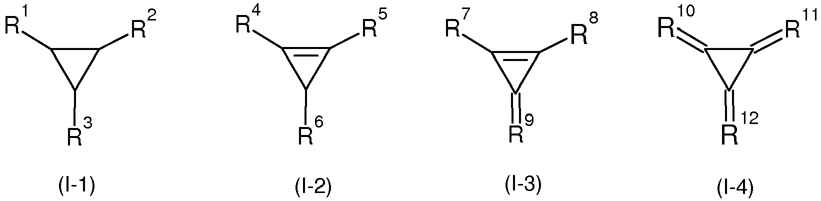 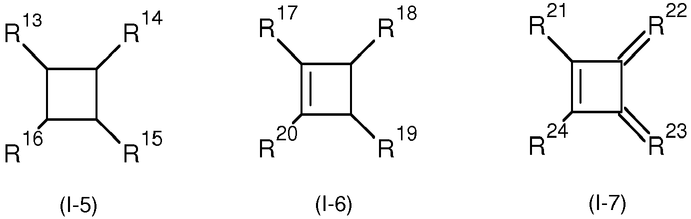 wherein:
- R¹ to R⁸, R¹³ to R²¹ and R²⁴, independently of each other represent OH; SH; an O-alkyl or S-alkyl group wherein the alkyl radical is linear and includes from 1 to 4 carbon atoms; an O-aryl or S-aryl wherein the aryl ring is a phenyl ring or substituted phenyl ring in the *para* position with an O-methyl or S-methyl group; or a NR²⁵R²⁶ group wherein the radicals R²⁵ and R²⁶, either identical or different, represent a C₁-C₄ alkyl radical;
- R⁹ to R¹², R²² and R²³, independently of each other, represent an oxygen or sulfur atom; a N-CN (isocyano) group or a C(CN)₂ (malononitrile) group.

2. The method according to claim 1, **characterized in that** in the compounds of formulae (I-1) to (I-7):
- the alkyl radical mentioned for R¹ to R⁸, R¹³ to R²¹ and R²⁴, is a methyl radical;
- R²⁵ and R²⁶ are identical and represent a methyl.

3. The method according to claim 1, **characterized in that** the method applies an organic molecule selected from the compounds of formulae (I-1) to (I-7) wherein the substituents R are selected from among 0 and OH.

4. The method according to claim 1, **characterized in that** the organic molecule is a compound of formula (I-3) wherein R⁷ = R⁸ = OH and R⁹ = 0 or a compound of formula (I-7) wherein R²² = R²³ = O and R²¹ = R²⁴ = OH.

5. The method according to any of the preceding claims, **characterized in that** the heat treatment temperature is 400°C.

6. The method according to any of the preceding claims, **characterized in that** the non-oxidizing atmosphere is brought by a flow of dinitrogen, argon, helium, hydrogen, said flows being used alone or as a mixture.

7. The method according to any of the preceding claims, **characterized in that** the heat treatment is carried out at atmospheric pressure and without any metal catalyst.

8. The method according to any of the preceding claims, **characterized in that** the starting organic molecule is used as a powder.

9. The method according to any of the preceding claims, **characterized in that** the duration of the heat treatment varies from 2 to 4 hours.

10. The method according to any of the preceding claims, **characterized in that** the heat treatment is carried out with a rise in temperature varying from 1 to 10°C/minute, from room temperature to the desired temperature.

11. The use of a material obtained according to the method defined in any of claims 1 to 10, said material consisting of a porous matrix essentially consisting of carbon in a sp² configuration and the pores of which are interconnected and have an average dimension of 40 Å, for manufacturing a system for detecting light waves.
